# EUROPÄISCHE PATENTSCHRIFT

(11) **EP 0 787 213 B1**
(45) Veröffentlichungstag und Bekanntmachung des Hinweises auf die Patenterteilung: **14.04.2004**
(21) Anmeldenummer: 96922678.6
(22) Anmeldetag: 18.07.1996
(51) Int. Cl.: C21B 13/00

(54) **VERFAHREN ZUR HERSTELLUNG VON FLÜSSIGEM ROHEISEN ODER STAHLVORPRODUKTEN SOWIE ANLAGE ZUR DURCHFÜHRUNG DES VERFAHRENS**
PROCESS FOR PRODUCING LIQUID RAW IRON OR SEMI-FINISHED STEEL PRODUCTS AND INSTALLATION FOR IMPLEMENTING IT
PROCEDE DE FABRICATION DE FONTE BRUTE LIQUIDE OU DE PRODUITS INTERMEDIAIRES ACIERES LIQUIDES, ET INSTALLATION POUR LA MISE EN OEUVRE DE CE PROCEDE

(30) Priorität: 19.07.1995 AT 1235959
(43) Veröffentlichungstag der Anmeldung: 06.08.1997
(73) Patentinhaber: VOEST-ALPINE INDUSTRIEANLAGENBAU GMBH, 4020 Linz (AT); POHANG IRON & STEEL CO., LTD., Pohang City 790-785 (KR); RESEARCH INSTITUTE OF INDUSTRIAL SCIENCE & TECHNOLOGY, INCORPORATED FOUNDATION, Pohang City, Kyong Sang Book-do 790-330 (KR)
(72) Erfinder: KEPPLINGER, Werner, Leopold, A-4060 Leonding (AT); WALLNER, Felix, A-4020 Linz (AT); SCHENK, Johannes, A-4040 Linz (AT)
(74) Vertreter: Kopecky, Helmut, Dipl.-Ing.
(86) Internationale Anmeldenummer: PCT/AT1996/000129
(87) Internationale Veröffentlichungsnummer: WO 1997/004137

(56) Entgegenhaltungen:
- DE-B- 1 154 817
- DE-B- 1 267 692
- DE-B- 2 660 884
- FR-A- 1 257 877
- SU-A- 3 002 736
- US-A- 3 264 096
- US-A- 3 607 224

## Beschreibung

Die Erfindungs betrifft ein Verfahren zur Herstellung von flüssigem Roheisen oder Stahlvorprodukten aus feinteilchenförmigem eisenhältigem Material, insbesondere reduziertem Eisenschwamm, in einer Einschmelzvergasungszone eines Einschmelzvergasers mit einem unteren Abschnitt (I) für die Aufnahme schmelzflüssigen Materials, einem darüber liegenden Abschnitt (II) mit einem Festbett aus festen stückigen Kohlenstoffträgern sowie einem darüber liegenden Abschnitt (III), der als Beruhigungsraum für sich bildendes Gas fungiert und mit einem haubenförmigen Kopf abgeschlossen ist, wobei unter Zuführung von kohlenstoffhältigem Material und sauerstoffhältigem Gas in die Einschmelzvergasungszone bei gleichzeitiger Bildung eines Export-Reduktionsgases in dem aus festen stückigen Kohlenstoffträgern gebildeten Festbett das eisenhaltige Material bei Durchtritt durch das Festbett eingeschmolzen wird, gegebenenfalls nach vorheriger Fertigreduktion, sowie eine Anlage zur Durchführung des Verfahrens.

Aus der EP-B - 0 010 627 ist ein Verfahren zur Herstellung von flüssigem Roheisen oder Stahlvorpodukten aus teilchenförmigem, eisenhältigem Material, insbesondere vorreduziertem Eisenschwamm, sowie zur Erzeugung von Reduktionsgas in einem Einschmelzvergaser bekannt, bei dem durch Zugabe von Kohle und durch Einblasen von sauerstoffhältigem Gas ein Wirbelbett aus Kokspartikeln gebildet wird. Das sauerstoffhältige Gas bzw. reiner Sauerstoff wird hierbei im unteren Bereich des Einschmelzvergasers eingeblasen. Das teilchenförmige eisenhaltige Material, insbesondere vorreduzierter Eisenschwamm, und die stückige Kohle werden durch Chargieröffnungen in der Haube des Einschmelzvergasers von oben zugeführt, die fallenden Teilchen werden im Wirbelbett abgebremst und die eisenhältigen Teilchen werden während des Durchfallens durch das Koksfließbett reduziert und geschmolzen. Das aufgeschmolzene, von Schlacke bedeckte Metall sammelt sich am Boden des Einschmelzvergasers. Metall und Schlacke werden durch getrennte Abstichöffnungen abgezogen.

Ein Verfahren dieser Art ist jedoch für die Verarbeitung von feinteiligem Eisenschwamm nicht geeignet, da feinteiliger Eisenschwamm infolge der starken Gasströmung im Einschmelzvergaser sofort aus diesem ausgetragen werden würde. Das Austragen wird noch durch die Temperatur im oberen Bereich des Einschmelzvergasers begünstigt, da diese zu nieder ist, um ein Einschmelzen des Eisenschwamms am Ort der Einbringung sicherzustellen.

Aus der US-A - 5,082,251 ist es bekannt, eisenhältiges Feinerz im Wirbelschichtverfahren mit Hilfe eines aus Erdgas erzeugten Reduktionsgases direkt zu reduzieren. Hierbei wird das eisenreiche Feinerz in einem System von in Serie angeordneten Wirbelschichtreaktoren mit Hilfe von Reduktionsgas unter erhöhtem Druck reduziert. Das so erzeugte Eisenschwammpulver wird anschließend einer Heiß- oder Kaltbrikettierung unterworfen. Für eine Weiterverarbeitung des Eisenschwammpulvers sind eigene Einschmelzanlagen vorzusehen.

Aus der EP-A - 0 217 331 ist es bekannt, Feinerz in einem Wirbelschichtverfahren direkt vorzureduzieren und das vorreduzierte Feinerz in einen Einschmelzvergaser zu leiten und mittels eines Plasmabrenners unter Zuführung kohlenstoffhaltigen Reduktionsmittels fertig zu reduzieren und aufzuschmelzen. In dem Einschmelzvergaser bildet sich ein Fließbett und darüber ein Wirbelbett aus Koks. Das vorreduzierte Feinerz bzw. das Eisenschwammpulver wird einem im unteren Abschnitt des Einschmelzvergasers vorgesehenen Plasmabrenner zugeführt. Nachteilig ist hierbei, daß durch die Zuführung des vorreduzierten Feinerzes unmittelbar im unteren Einschmelzbereich, d.h. im Bereich der Schmelzensammlung, ein Fertigreduzieren nicht mehr sichergestellt ist und auf keinen Fall die für eine Weiterverarbeitung des Roheisens nötige chemische Zusammensetzung erreicht werden kann. Zudem ist die Einbringung großer Mengen vorreduzierten Feinerzes wegen des im unteren Bereich des Einschmelzvergasers sich aus Kohle bildenden Fließbettes bzw. Festbettes nicht möglich, da eine ausreichende Abfuhr der Schmelzprodukte aus der Hochtemperaturzone des Plasmabrenners nicht möglich ist. Das Einbringen größerer Mengen vorreduzierten Feinerzes würde sofort zu einem thermischen und mechanischen Versagen des Plasmabrenners führen.

Aus der EP-B - 0 111 176 ist es bekannt, Eisenschwammpartikel und flüssiges Roheisen aus stückigem Eisenerz herzustellen, wobei das Eisenerz in einem Direktreduktions-Aggregat direktreduziert wird und aus dem Direktreduktion-Aggregat ausgetragene Eisenschwammpartikel in eine Grob- und Feinkornfraktion getrennt werden. Die Feinkornfraktion wird einem Einschmelzvergaser zugeführt, in dem aus eingebrachter Kohle und zugeführtem sauerstoffhältigem Gas die zum Schmelzen des Eisenschwammes erforderliche Wärme sowie das dem Direktreduktions-Aggregat zugeführte Reduktionsgas erzeugt werden. Die Feinkornfraktion wird in den Einschmelzvergaser über ein Fallrohr zugeleitet, das vom Kopf des Einschmelzvergasers bis in die Nähe des Kohlefließbettes ragt. Am Ende des Fallrohes ist eine Prallplatte zur Geschwindigkeitsminimierung der Feinkornfraktion vorgesehen, wodurch die Austrittsgeschwindigkeit der Feinkornfraktion aus dem Fallrohr sehr gering ist. An der Stelle der Einbringung ist die im Einschmelzvergaser herrschende Temperatur sehr niedrig, wodurch es nicht zu einem sofortigen Aufschmelzen der zugeführten Feinkornfraktion kommen kann. Dies und die niedrige Austrittsgeschwindigkeit aus dem Fallrohr bedingt, daß ein beträchtlicher Anteil der zugeführten Feinkornfraktion mit dem im Einschmelzvergaser erzeugten Reduktionsgas aus diesem wieder austritt. Das Einbringen einer größeren Menge an Feinkorn oder ausschließlich von Feinkorn ist gemäß diesem Verfahren nicht möglich.

Bei einem Verfahren gemäß der EP-A - 0 576 414 werden stückige eisenerzhältige Einsatzstoffe in einem Reduktionsschachtofen direkt reduziert, u.zw. mittels des in der Einschmeizvergasungszone gebildeten Reduktionsgases. Der so erhaltene Eisenschwamm wird dann der Einschmelzvergasungszone zugeführt. Um bei diesem bekannten Verfahren zusätzlich Feinerz und/oder Erzstaub, wie in einem Hüttenwerk anfallenden oxidischen Eisenfeinstaub, verwerten zu können, wird das Feinerz und/oder der Erzstaub mit festen Kohlenstoffträgern einem in die Einschmelzvergasungszone arbeitenden Staubbrenner zugeführt und in einer unterstöchiometrischen Verbrennungsreaktion umgesetzt. Ein solches Verfahren erlaubt eine effiziente Aufarbeitung von in einem Hüttenwerk anfallendem Feinerz und/oder Erzstaub, u.z.w. bis zu einer Größenordnung von 20 bis 30 % des Gesamterzeinsatzes, und so ein kombiniertes Verarbeiten von Stückerz und Feinerz.

Die Erfindung bezweckt die Vermeidung dieser Nachteile und Schwierigkeiten und stellt sich die Aufgabe, ein-Verfahren der eingangs beschriebenen Art sowie eine Anlage zur Durchführung des Verfahrens zu schaffen, bei welchen ein Verarbeiten von feinteilchenförmigem eisenhältigem Material, ohne ein Brikettieren zu erfordern, möglich ist und hierbei einerseits ein Austragen der zugeführten Feinteilchen, also des eisenhaltigen Materials, gegebenenfalls im vorreduzierten oder im fertigreduzierten Zustand, durch das im Einschmelzvergaser erzeugte Reduktionsgas zuverlässig vermieden wird und andererseits ein gegebenenfalls erforderliches Fertigreduzieren gesichert ist. Die Erfindung stellt sich insbesondere die Aufgabe, ein Verfahren zu schaffen, mit dem ein zu 100 % aus feinteilchenförmigem eisenhältigem Material bestehender Einsatz zu Roheisen und/oder Stahlvormaterial unter Verwendung eines Einschmelzvergasers verarbeitet werden kann.

Diese Aufgabe wird erfindungsgemäß bei einem Verfahren der eingangs beschriebenen Art dadurch gelöst, daß zentral am haübenförmigen Kopf und am oberen Ende des Beruhigungsraumes (III) eine Hochtemperatur-Brenn- und/oder Vergasungszone durch Verbrennung und/oder Vergasung von kohlenstoffhältigem Material unter direkter Sauerstoffzufuhr gebildet wird, in die das feinteilchenförmige eisenhältige Material direkt nach unten gerichtet eingeleitet wird, wobei durch die bei der Umsetzung des kohlenstoffhältigen Materials freiwerdende Wärme zumindest ein Oberflächen-Anschmelzen des eisenhältigen Materials und ein Agglomerieren desselben durchgeführt wird.

Die so gebildeten Agglomerate weisen einen größeren hydraulischen Durchmesser und/oder eine höhere Dichte und damit eine höhere Sinkgeschwindigkeit auf. Hierdurch und durch ihren besseren Formfaktor, d.h. günstigeren Cw-Wert infolge weitgehender Kugelbildung, wird ein Austrag des eisenhältigen Materials durch das aus dem Einschmelzvergaser abgeleitete Reduktionsgas verhindert.

Aus der EP-A - 0 174 291 ist es bekannt, staubförmige sulfidische Nicht-Eisen-Metallerze, insbesondere Buntmetallerze, über einen Schmelzbrenner einem Einschmelzvergaser zuzuführen. Hierbei können auch größere Mengen sulfidischer Nicht-Eisen-Metallerze verarbeitet werden, da die zum Schmelzen der Erzteilchen erforderliche Wärme durch die exotherme Umsetzung des sulfidischen Erzes mit Sauerstoff im Brenner erzeugt wird, z.B. nach folgender Umsetzung:

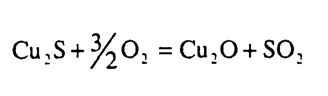

Die Kohle zur Bildung einer Kohlenstoff-Wirbelschicht wird bei diesem bekannten Verfahren gesondert in die Einschmelzvergasungszone chargiert. Bei einem Verfahren dieser Art ist es nicht möglich, größere Mengen oxidischer Feinerze einzusetzen, da hierbei eine ein Schmelzen dieser oxidischen Feinerze bewirkende Wärme fehlen würde. Die Folge wäre das Austragen dieser Erze durch das in der Einschmelzvergasungszone gebildete und aus dem Einschmelzvergaser abgeleitete Reduktionsgas.

Zur Erzielung einer möglichst gleichmäßigen und vollständigen Mischung und Aufarbeitung der zugeführten Feststoffe wird erfindungsgemäß die Hochtemperatur-Brennund/oder Vergasungszone zentral und am oberen Ende des Einschmelzvergasers gebildet und erfolgt die Zufuhr der Materialien nach unten gerichtet, wobei zweckmäßig das Agglomerieren unter Verwirbeln des eisenhältigen Materials in der Hochtemperatur-Brenn- und/oder Vergasungszone beschleunigt und intensiviert wird sowie weiters vorteilhaft die Zufuhr des Sauerstoffes in die Hochtemperatur-Brenn- und/oder Vergasungszone ebenfalls unter Verwirbelung erfolgt.

Gemäß einer bevorzugten Ausführungsvariante wird das eisenhältige Material vermischt mit festem, feinteiligem, kohlenstoffhältigem Material in die Hochtemperatur-Brenn- und/oder Vergasungszone eingeleitet, was insbesondere bei einem Heißeinsatz nur für feinteiligen Koks in Frage kommt.

Zusätzlich ist es von Vorteil, wenn die Eintrittsgeschwindigkeit des eisenhältigen Materials in die Hochtemperatur-Brenn- und/oder Vergasungszone mittels eines Treibgases, wie Stickstoff oder prozeßeigenes Gas, erhöht wird.

Gemäß einer bevorzugten Ausführungsform wird in der Einschmelzvergasungszone gebildetes Reduktionsgas einer Vorwärmzone und/oder einer Direktreduktionszone zur Vorbehandlung des eisenhältigen Materials zugeführt, wobei das vorgewärmte und/oder reduzierte eisenhältige Material im heißen Zustand der Hochtemperatur-Brenn- und/oder Vergasungszone zugeführt wird. Vorteilhaft wird hierbei der Vorwärm- bzw. Direktreduktionszone zusätzlich Koksstaub zugeführt.

Eine weitere bevorzugte Ausführungsvariante ist dadurch gekennzeichnet, daß in den Einschmelzvergaser im Nahbereich der Reduktionsgas-Ableitung Feinkohle und/oder andere kohlenstoffhältige Materialien mit Flüchtigenanteil zusammen mit sauerstoffhältigem Gas eingeleitet wird, die Feinkohle und/oder andere kohlenstoffhältige Materialien mit Flüchtigenanteil zu Feinkoks umgesetzt wird und der Feinkoks zusammen mit dem Reduktionsgas aus dem Einschmelzvergaser ausgetragen wird, abgeschieden wird und der Hochtemperatur-Brenn- und/oder Vergasungszone zugeführt wird. Als andere kohlenstoffhältige Materialien kommen z.B. Kunststoffschredder und feinteiliger Petrolkoks in Frage.

Hierbei wird zweckmäßig der heiße Feinkoks gemischt mit dem heißem eisenhältigen Material der Hochtemperatur-Brenn- und/oder Vergasungszone zugeführt.

Wird der Hochtemperatur-Brenn- und/oder Vergasungszone Feinkohle und/oder andere kohlenstoffhältige Materialien mit Flüchtigenanteil zugeführt, erfolgt die Zuführung bis zur Hochtemperaturbrennzone getrennt vom eisenhältigen Material, insbesondere wenn dieses bereits vorgewärmt ist, da ein Kontakt von Kohle mit heißem Eisenschwamm zur Entgasung und Teerbildung der Kohle führen würde. Es käme zu Anpackungen in den Förderleitungen und damit zu erheblichen betriebstechnischen Problemen.

Zur Bildung des aus festen Kohlenstoffträgern gebildeten Bettes wird vorteilhaft in die Einschmelzvergasungszone zusätzlich stückige Kohle eingebracht.

Eine bevorzugte Variante ist dadurch gekennzeichnet, daß in der Vorwärm- und/oder Direktreduktionszone eine Trennung des eisenhältigen Materials in eine Feinkornfraktion und eine Grobkornfraktion, letztere vorzugsweise mit Teilchen zwischen 0,5 und 8 mm, durchgeführt wird und nur die Feinkornfraktion der Hochtemperatur-Brenn- und/oder Vergasungszone und die Grobkornfraktion direkt in den Einschmelzvergaser, vorzugsweise dessen Beruhigungszone, eingebracht werden. Die gröberen Anteile des reduzierten Eisenerzes können allein durch Schwerkraft chargiert werden, sie würden bei Zugabe in die Hochtemperatur-Brenn- und/oder Vergasungszone lediglich Wärme verbrauchen. Diese Wärme steht somit den Feinteilchen zur Agglomerierung zur Verfügung. Der zur Bildung der Hochtemperatur-Brenn- und/oder Vergasungszone dienende Brenner kann somit effektiver wirken und gegebenenfalls, ohne die Agglomerierung zu beeinträchtigen, kleiner dimensioniert werden.

Eine weitere bevorzugte Variante ist dadurch gekennzeichnet, daß das Reduktionsgas der Vorwärmzone und/oder Direktreduktionszone ungereinigt zugeführt wird. Hierdurch kann kohlenstoffhältiger Staub aus dem Einschmelzvergaser in der Vorwärm- und/oder Direktreduktionszone abgeschieden und der Hochtemperatur-Brenn- und/oder Vergasungszone direkt zugeführt und dort thermisch genutzt werden.

Eine Anlage zur Durchführung des Verfahrens mit einem Einschmelzvergaser mit Zu- und Ableitungen für die Zugabe von kohlenstoffhältigem Material, eisenhältigem Material, für den Abzug des erzeugten Export-Reduktionsgases und für die Zuführung von sauerstoffhältigem Gas in die Einschmelzvergasungszone, sowie weiters mit einem Schlacken- und Eisen-Schmelzenabstich, wobei ein unterer Abschnitt des Einschmelzvergasers zum Auffangen des geschmolzenen Roheisens bzw. Stahlvormaterials und der flüssigen Schlacke, ein darüber liegender mittlerer Abschnitt zur Aufnahme eines Bettes aus festen stückigen Kohlenstoffträgern und anschließend ein oberer Abschnitt als Beruhigungsraum für in der Einschmelzvergasungszone gebildetes Reduktionsgas, der mit einem haubenförmigen Kopf abgeschlossen ist, vorgesehen sind, ist dadurch gekennzeichnet, daß zentral am haubenförmigen Kopf und am oberen Ende des Beruhigungsraumes mindestens ein ein sauerstoffhältiges Gas und feinteilchenförmiges eisenhältiges Material nach unten zuführender Brenner und eine Zuführeinrichtung zur Zufuhr von festen feinteilchenförmigen Kohlenstoffträgern vorgesehen sind, wobei vorteilhaft ein einziger zentral, d.h. an der vertikalen Längsmittelachse des Einschmelzvergasers angeordneter Brenner vorgesehen ist, dessen Brennermund gegen die Oberfläche des Bettes gerichtet ist.

Zweckmäßig erfolgt die Zufuhr der festen feinteilchenförmigen Kohlenstoffträger ebenfalls über den Brenner, wobei dieser vorteilhaft als Sauerstoff-Kohlenstoff-Brenner ausgebildet ist.

Zur Erzielung einer guten Durchmischung der dem Brenner zugeführten Feststoffe untereinander sowie mit dem zugeführten sauerstoffhältigen Gas ist vorteilhaft der Brenner mit einer Verwirbelungseinrichtung für die über den Brenner zugeführten Feststoffe sowie weiters zweckmäßig mit einer Verwirbelungseinrichtung für das über den Brenner zugeführte sauerstoffhältige Gas versehen.

Eine einfache Brennerausführung ergibt sich, wenn in den Brenner eine Mischgut-Leitung zur Zuführung des feinteilchenförmigen eisenhältigen Materials und der festen feinteilchenförmigen Kohlenstoffträger mündet. Diese Ausführungsform eignet sich insbesondere für den Einsatz von feinteilchenförmigem Koks.

Eine bevorzugte Ausführungsform ist dadurch gekennzeichnet, daß in den Brenner eine heißes feinteilchenförmiges eisenhältiges Material zuführende Leitung mündet und dieses Material über eine eigene Leitung bis zum Brennermund geführt ist, und daß weiters eine eigene bis zum Brennermund geführte Leitung im Brenner vorgesehen ist, in die eine feste feinteilchenförmige Kohlenstoffträger, wie Kohle, zuführende Leitung mündet.

Gemäß einer weiteren bevorzugten Ausführungsform mündet eine Reduktionsgas-Ableitung, vom Beruhigungsraum des Einschmelzvergasers ausgehend, in eine Einrichtung zum Vorwärmen und/oder Direktreduzieren des feinteilchenförmigen eisenhältigen Materials, wobei vorteilhaft in der Reduktionsgas-Ableitung ein Staubabscheider zwischengeschaltet ist, von dem eine Staubrückführleitung einem in Höhe des Beruhigungsraumes angeordneten Staubbrenner zugeführt ist.

Weiters dient hierbei vorteilhaft die Einrichtung zum Vorwärmen und/oder zur Direktreduktion zusätzlich zum Vorwärmen von Koksstaub gemischt mit feinteilchenförmigem eisenhaltigem Material und mündet eine von der Vorwärm- und/oder Vorreduktionseinrichtung ausgehende Mischgut-Leitung in den Brenner.

Eine weitere bevorzugte Ausführungsform ist dadurch gekennzeichnet, daß der Einschmelzvergaser im Nahbereich der Öffnung der Reduktionsgas-Ableitung einen Brenner zur Zufuhr von feinteilchenförmiger Kohle und/oder anderen kohlenstoffhältigen Materialien mit Flüchtigenanteil aufweist, und daß in der Reduktionsgas-Ableitung ein Staubabscheider zur Abscheidung von mit dem Reduktionsgas ausgetragenem feinteilchenförmigem Koks vorgesehen ist, wobei von dem Staubabscheider eine Staubrückführleitung in eine feinteilchenförmiges eisenhältiges Material dem Brenner zuführende Leitung mündet und wobei zweckmäßig die Reduktionsgas-Ableitung in eine Einrichtung zur Vorwärmung und/oder Vorreduktion von feinteilchenförmigem eisenhältigem Material mündet.

Zweckmäßig weist die Einrichtung zum Vorwärmen und/oder Direktreduzieren eine Fraktioniereinrichtung zur Trennung des eisenhältigen Materials in eine Grob- und eine Feinkornfraktion auf und ist die Feinkornfraktion über die Mischgutleitung bzw. Leitung zum Brenner geführt, wogegen die Grobkornfraktion über eine Leitung zum Einschmelzvergaser direkt zugeführt wird.

Vorteilhaft mündet die Reduktionsgasableitung in die Einrichtung zum Vorwärmen und/oder Direktreduzieren direkt, d.h. ohne Zwischenschaltung eines Staubabscheiders.

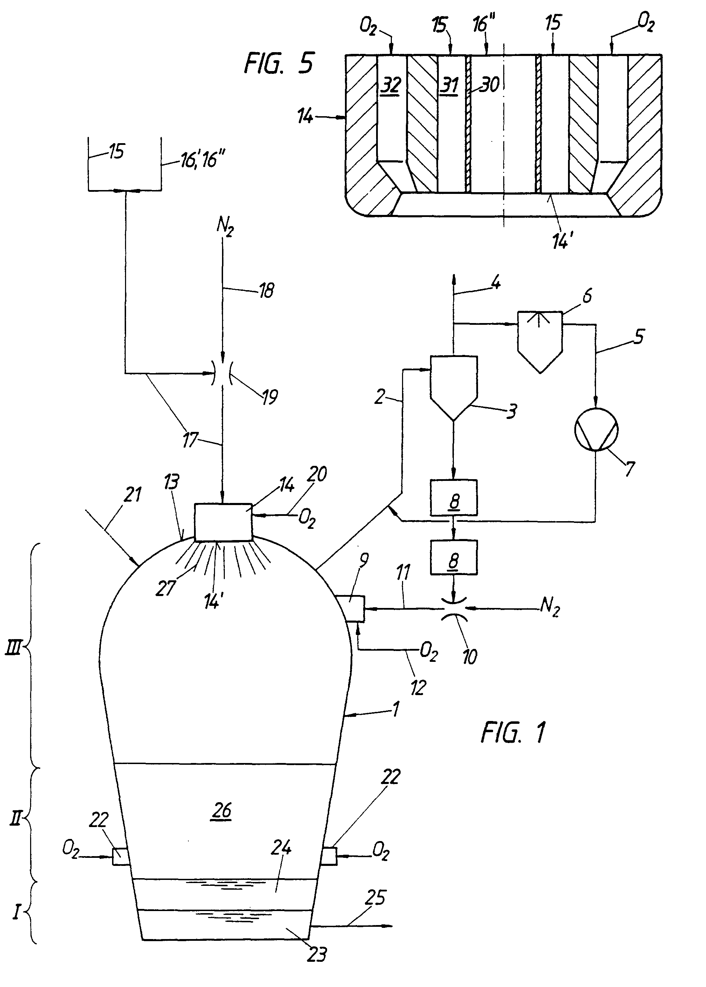

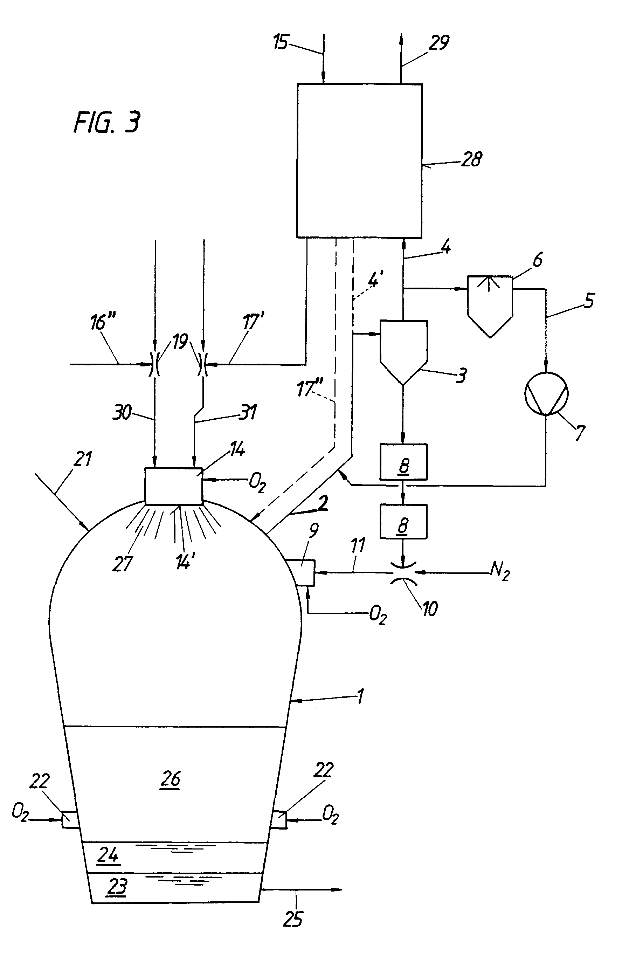

Die Erfindung ist nachstehend anhand mehrerer Ausführungsbeispiele näher erläutert, wobei die Fig. 1 bis 4 in schematischer Darstellung jeweils eine Anlage zur Durchführung des erfindungsgemäßen Verfahrens nach jeweils einer Ausführungsform veranschaulichen. Fig. 5 zeigt ein Detail der Fig. 3 in vergrößertem Maßstab.

Mit 1 ist ein Einschmelzvergaser bezeichnet, in dem aus Kohle und sauerstoffhältigem Gas ein CO- und H₂-hältiges Reduktionsgas erzeugt wird. Dieses Reduktionsgas wird über eine Reduktionsgas-Ableitung 2, die in einen Gasreinigungs-Zyklon 3 mündet, aus dem Einschmelzvergaser 1 abgeleitet und vom Zyklon 3 über eine Exportgasleitung 4 einem Verbraucher zugeführt. Ein Teil des über die Exportgasleitung 4 abgeleiteten Reduktionsgases wird mittels einer Rücklaufleitung 5 über einen Wäscher 6 und einen Kompressor 7 wiederum in die Reduktionsgas-Ableitung 2 rezirkuliert, um das Reduktionsgas zu kühlen.

Der im Zyklon 3 abgeschiedene Staub wird über Staubsammelbehälter 8 einem Staubbrenner 9 mit Hilfe eines über einen Injektor 10 zugeführten Treibgases (z.B. Stickstoff) über die Staubrückführleitung 11 zugeführt und im Staubbrenner 9 gemeinsam mit über eine SauerstoffZuführungsleitung 12 zugeführtem Sauerstoff bzw. sauerstoffhältigem Gas verbrannt.

Der Einschmelzvergaser 1 weist an seinem oberen Ende, d.h. seinem Kopf 13 bzw. seiner Haube, einen zentral angeordneten Brenner 14 auf, mittels dem feinteikhenförmiges eisenhältiges Material 15, wie z.B. eisenhältige Stäube, insbesondere Erzstäube, Eisenschwammstäube etc., und feste feinteilige Kohlenstoffträger, wie Koksstäube 16', Kohlenstäube 16", Kunststoffschredder, Petrolkoks etc., in den Einschmelzvergaser 1 eingebracht werden. Gemäß der in Fig. 1 dargestellten Ausführungsform werden die feinteiligen festen Kohlenstoffträger 16', 16" mit dem feinteilchenförmigen eisenhältigen Material gemischt und über eine Mischgutleitung 17 dem Brenner 14 zugeführt, wobei zur Erhöhung der Eintrittsgeschwindigkeit der dem Brenner 14 zugeführten Feststoffe 15, 16', 16" in die Mischgutleitung 17 eine Treibgasleitung 18 über einen Injektor 19 einmündet. Als Treibgas wird beispielsweise Stickstoff eingesetzt. In den Brenner 14 mündet weiters eine ein sauerstoffhältiges Gas zuführende Leitung 20.

Der Brennermund 14' kann beispielsweise, wie in der EP-A - 0 481 955 beschrieben, ausgestaltet sein, wobei die Mischgutleitung 17 in ein zentrales Innenrohr des Brenners 14 mündet, das von einem das sauerstoffhältige Gas zuführenden Ringspalt umgeben ist. Prinzipiell könnten die feinteiligen festen Kohlenstoffträger auch über eigene Lanzen zum Brennermund 14' gefördert werden. Vorteilhaft wird mit Hilfe des Brenners 14 durch eine Verdralleinrichtung (z.B. schraubenlinienförmig gestaltete Austrittskanäle) der dem Brenner 14 zugeführte Feststoff beim Austritt aus dem Brenner 14 verdrallt. Zusätzlich kann noch eine Verdrallung des über einen Ringraum zugeführten Sauerstoffstrahles stattfinden, wodurch eine besonders gute Mischung erzielt wird.

Der Einschmelzvergaser 1 weist weiters an seinem oberen Ende 13 eine Zuführung 21 für stückige Kohlenstoffträger, wie Kohle, sowie weiter unten angeordnete Zuführungen 22 für sauerstoffhältige Gase sowie gegebenenfalls Zuführungen für bei Raumtemperatur flüssige oder gasförmige Kohlenstoffträger, wie Kohlenwasserstoffe, sowie für gebrannte Zuschläge auf.

In dem Einschmelzvergaser 1 sammelt sich in einem unteren Abschnitt I schmelzflüssiges Roheisen 23 bzw. schmelzflüssiges Stahlvormaterial und schmelzflüssige Schlacke 24, die über einen Abstich 25 abgestochen werden.

In einem über dem unteren Abschnitt I angeordneten Abschnitt II des Einschmelzvergasers kommt es zur Ausbildung eines Festbettes und/oder eines Fließbettes 26 aus den festen Kohlenstoffträgern. In diesen Abschnitt II münden die Zuführungen 22 für sauerstoffhältige Gase. Ein oberhalb des mittleren Abschnittes II vorgesehener oberer Abschnitt III fungiert als Beruhigungsraum für das sich im Einschmelzvergaser 1 bildende Reduktionsgas sowie für mit dem Gasstrom mitgerissene Feststoffteilchen. In diesen oberen Abschnitt III mündet der der Staubrückführung dienende Staubbrenner 9.

Am Brennermund 14' bildet sich eine Hochtemperatur-Brenn- und/oder Vergasungszone 27, in der die Feinteilchen des eisenhältigen Materials 15 unter Tröpfchenbildung aufgeschmolzen oder zumindest oberflächlich angeschmolzen werden, wodurch es zu Agglomerationen der eisenhältigen Feinteilchen kommt. Hierdurch wird wirkungsvoll verhindert, daß das feinteilchenförmige eisenhältige Material mit dem aus dem Einschmelzvergaser 1 abgeleiteten Reduktionsgas ausgetragen wird.

Die sich bildenden Tröpfchenaggtomerate weisen einen höheren hydraulischen Durchmesser und/oder eine höhere Dichte und damit eine höhere Sinkgeschwindigkeit als die Feinteilchen auf. Diese Sinkgeschwindigkeit wird zudem wegen des besseren Formfaktors, d.h. C_{w}-Wertes der sich bildenden Tröpfchenagglomerate, weiter verbessert.

Die Anordnung des Brenners 14 in einem zentralen Bereich am Kopf 13 des Einschmelzvergasers 1 ermöglicht eine gleichmäßige Mischung der zugeführten Feststoffteilchen und damit eine vollständige Agglomeration. Eine gleichmäßige Einbindung der Eisenträger 15 in das aus festen Kohlenstoffträgern im Einschmelzvergaser 1 gebildete Fest- bzw. Fließbett 26 ist die Folge. Hierdurch gelingt es, den Schmelzreduktionsprozess mit 100 % Feinerz zu verwirklichen und ein Austragen der Eisenträger 15 im festen Zustand aus dem Einschmelzvergaser 1 zu vermeiden.

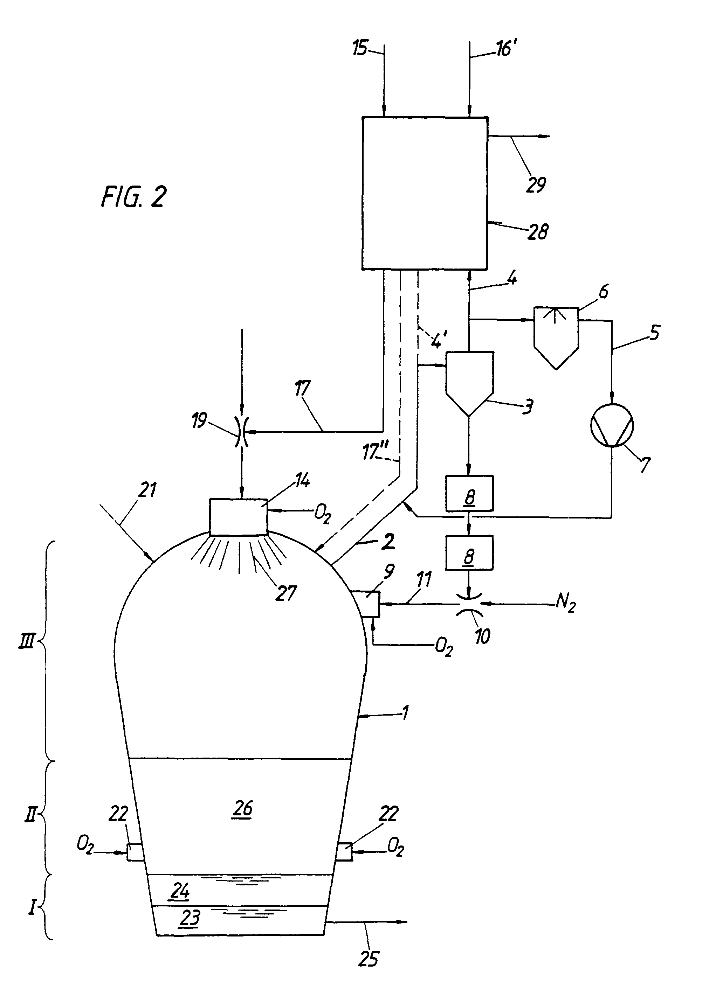

Gemäß der in Fig. 2 dargestellten Ausführungsform wird das Reduktionsgas über die Exportgasleitung 4 einem Vorwärm- und/oder Vorreduktions- und/oder Fertigreduktions-Reaktor 28 zugeführt, in den sowohl Koksstaub 16' als auch feinteilchenförmiges eisenhältiges Material 15, wie Erzstaub oder Eisenschwammstaub, aufgegeben werden. Nach Durchströmen dieses Reaktors 28 im Gegenstrom zu den aufgegebenen Feststoffteilchen wird das gegebenenfalls teilverbrauchte Reduktionsgas über die Leitung 29 als Exportgas abgezogen. Das am unteren Ende aus dem Reaktor 28 austretende vorgewärmte sowie gegebenenfalls vorreduzierte oder auch fertigreduzierte Feststoffmaterial gelangt über die Mischgutleitung 17 zum Brenner 14, wobei in diesem Fall ebenfalls die Austrittsgeschwindigkeit mittels eines über einen Injektor 19 zugeleiteten Treibgases, wie Stickstoff, erhöht wird. Die Korngröße der Koksstaubpartikel ist so groß, daß die Sinkgeschwindigkeit der Koksstaubpartikel etwas höher ist als die Leerrohrgeschwindigkeit im Reaktor 28.

Der der Vorwärmung bzw. Reduktion dienende Reaktor 28 ist vorteilhaft als Schachtofen ausgebildet. Anstelle des Schachtofens 28 könnte auch ein Drehrohrofen oder ein Drehherd vorgesehen sein. Weiters könnten anstelle des einzigen Reaktors 28 mehrere in Serie hintereinander geschaltete Wirbelschichtreaktoren vorgesehen sein, wobei das Feinerz von Wirbelschichtreaktor zu Wirbelschichtreaktor über Förderleitungen entgegengesetzt zum Reduktionsgas geleitet wird, u.zw. ähnlich, wie in der US-A - 5,082,251 beschrieben.

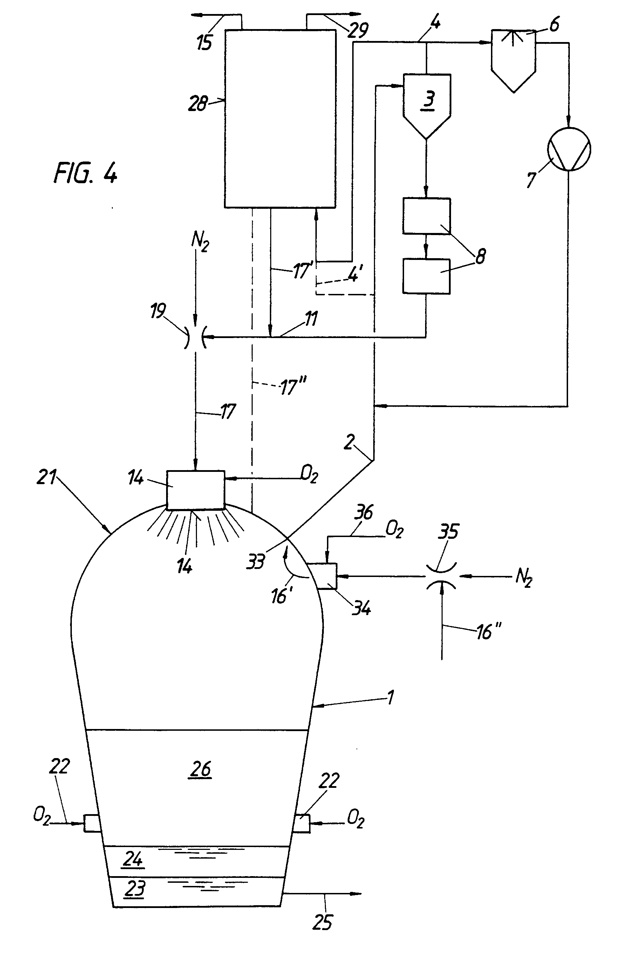

Die in Fig. 2 dargestellte Staubrückführung über 3, 8, 9, 11 könnte deutlich reduziert werden und gegebenenfalls auch entfallen, da ein dem Reaktor 28 über die strichliert dargestellte Leitung 4' (die Leitung 4 kann dann entfallen) zugeführter Staub mit den vorgewärmten bzw. gegebenenfalls vorreduzierten Feststoffen aus dem Reaktor 28 wiederum ausgetragen und dem Brenner 14 zugeführt wird und in der Hochtemperaturzone 27 thermisch genutzt werden kann. In diesem Fall kann also auf den Zyklon 3 verzichtet werden bzw. dieser nur für die rezirkulierte Reduktionsgasmenge ausgelegt sein (Dies gilt auch für die in den Fig. 3 und 4 dargestellte Ausführungsform). Hierdurch ergibt sich für die in den Fig. 2 und 3 dargestellten Ausführungsformen eine kleinere Staubmenge für den Staubbrenner 9.

Gemäß der in Fig. 3 dargestellten Ausführungsform wird dem vom Reduktionsgas durchströmten Reaktor 28 lediglich feinteilchenförmiges eisenhältiges Material 15 zugeführt. Als fester Kohlenstoffträger wird dem Brenner 14 Feinkohle 16" zugeleitet, wobei in diesem Fall die Feinkohle 16" separiert vom aus dem Reaktor 28 stammenden und über die Leitung 17' zugeführten vorgewärmten bzw. vorreduzierten Material bis zum Brennermund 14' geführt wird, um ein Entgasen sowie eine Teerbildung der Kohle zu vermeiden.

In Fig. 5 ist ein Brenner 14 dargestellt, der in diesem Fall zum Einsatz gelangen könnte. Durch ein Zentralrohr 30 des Brenners 14 wird die Feinkohle 16" und durch einen das Zentralrohr 30 umgebenden Ringspalt 31 getrennt von der Feinkohle 16" vorgewärmter Eisenschwamm bzw. vorgewärmtes Feinerz 15 zugeführt. Dieser Ringspalt 31 ist von einem weiteren Ringspalt 32 zur Zuführung eines sauerstoffhältigen Gases umgeben.

Gemäß der in Fig. 4 dargestellten Ausführungsform mündet in den Einschmelzvergaser 1 im Nahbereich der Öffnung 33 der Reduktionsgas-Ableitung 2 ein Brenner 34 zur Zufuhr von feinteilchenförmiger Kohle 16". Diese wird mittels eines Treibgases, wie Stickstoff, das über einen Injektor 35 zugeleitet wird, dem Brenner 14 zugeführt. In den Brenner 14 mündet eine ein sauerstoffhältiges Gas zuführende Leitung 36. Anstelle von feinteilchenförmiger Kohle 16" bzw. zusätzlich kann auch anderes kohlenstoffhältiges Material mit Flüchtiganteil eingesetzt werden, wie Kunststoffschredder, Petrolkoks etc..

Es kommt zu einer Umsetzung - einer Teilverbrennung - der zugeführten Feinkohle 16" zu Koksstaub 16'. Dieser wird durch die Anordnung des Brenners 14 im Nahbereich der Öffnung 33 der Reduktionsgas-Ableitung 2 nahezu vollständig mit dem Reduktionsgas ausgetragen und in dem Zyklon 3, in den die Reduktionsgas-Ableitung 2 mündet, abgeschieden. Über eine Staubrückführungsleitung 11 wird der Koksstaub 16' mit im Reaktor 28 vorgewärmtem bzw. vorreduziertem feinteilchenförmigem eisenhältigem Material 15 vermischt und mittels eines Treibgases, wie Stickstoff, über eine Mischgutleitung 17 dem Brenner 14 zugeführt.

Bei Ausführungsformen gemäß den Fig. 2 bis 4 könnte der Reaktor 28 mit einer Fraktioniereinrichtung ausgestattet sein, wobei die grobkörnige Fraktion (Teilchen zwischen 0,5 und 8 mm) dem Einschmelzvergaser 1 direkt über eine Leitung 17", z.B. mittels Schwerkraftchargierung, und die Feinteilchen der Hochtemperatur-Brenn- und/oder Vergasungszone 27 zugeführt werden. Hierdurch ergibt sich eine Entlastung des Brenners 14, so daß dessen Wärme ausschließlich für Feinstteilchen, die zur Vermeidung eines Austragens unbedingt agglomeriert werden müssen, zur Verfügung steht.

Die Korngröße des für das erfindungsgemäße Verfahren zum Einsatz gelangenden Feinerzes liegt vorzugsweise in einem Bereich von 8 bis 0 mm.

### Beispiel I:

Für die Erzeugung von 40 t Roheisen/h mit einer Anlage gemäß Fig. 1 werden in den Einschmelzvergaser 1 970 kg Kohle/t RE (Roheisen), davon 250 kg Feinkohle/t RE (16") und der Rest als stückige Kohle (bei 21), sowie 1.134 kg feinteilchenförmiges eisenhältiges Material 15/t RE eingesetzt.

### • Kohle:

### Chemische Analyse der Kohle (Feinkohle 16" und stückige Kohle, Gewichtsanteile, trockene Basis)

| | |
|---|---|
| C | 81,4 % |
| H | 4,3 % |
| N | 1,7 % |
| O | 2,9 % |
| S | 0,7 % |
| Asche | 9,0 % |
| C-fix | 75,3 % |

### Korngrößenverteilung der Feinkohle 16"

- 500 µm 100 %
- 250 µm 85 %
- 100 µm 51 %
- 63 µm 66 %
- 25 µm 21 %

### • feinteilchenförmiges eisenhältiges Material 15 (Reststoffe aus einem Hüttenwerksbetrieb):

### Chemische Analyse (Gewichtsanteile):

| | |
|---|---|
| Fe_{ges} | 86,6 % |
| Fe_{mct} | 45,0 % |
| Fe₀ | 49,0 % |
| Fe₂O₃ | 5,0 % |
| Glühverluste | 0,2 % |
| Feuchte | 1,() % |

### Korngrößenverteilung

- 250 µm 100 %
- 100 µm 90 %
- 63 µm 71 %
- 25 µm 38 %
- 10 µm 15 %

### • Zuschläge:

### Chemische Analyse (Gewichtsanteile):

| | |
|---|---|
| CaO | 34,2 % |
| MgO | 6,0 % |
| SiO₂ | 22,0 % |
| Al₂O₃ | 0,3 % |
| Fe₂O₃ | 2,1 % |
| MnO | 0,2 % |
| Glühverluste | 33,8 % |

Es werden über die als Blasformen ausgebildeten Zuführungen 22 347 Nm³ O₂/t RE zum Vergasen der Kohle ins Bett 26 eingebracht, der Verbrauch des Brenners 14 beträgt 247 Nm³ O₂/t RE.

### • Roheisen 23:

### Chemische Analyse (Gewichtsanteile):

| | |
|---|---|
| C | 4,3 % |
| Si | 0,4 % |
| Mn | 0,05 % |
| P | 0,03 % |
| S | 0,05 % |
| Fe | 95,1 % |

### • Exportgas:

| | |
|---|---|
| Menge | 1.640 Nm³/t RE |

### Analyse (VolumenanteiJe):

| | |
|---|---|
| CO | 73,3 % |
| CO₂ | 6,4 % |
| H₂ | 14,3 % |
| H₂O | 2 % |
| N₂ + Ar | 2,9 % |
| CH₄ | 1,1 % |
| | |
| Heizwert: | 11.200 kJ/Nm³ |

### Beispiel II:

Für die Erzeugung von 40 t Roheisen/h mit einer Anlage gemäß Fig. 2 werden in den Einschmelzvergaser 1 758 kg stückige Kohle/t RE (bei 21) und in den Reaktor 28 222 kg Koksstaub/t RE 16' sowie 1.457 kg feinteilchenförmiges eisenhältiges Material 15/t RE eingesetzt.

### • stückige Kohle:

### Chemische Analyse der Kohle (Gewichtsanteile, trockene Basis)

| | |
|---|---|
| C | 81,4 % |
| H | 4,3 % |
| N | 1,7 % |
| O | 2,9 % |
| S | 0,7 % |
| Asche | 9,0 % |
| C-fix | 75,3 % |

### • Koksstaub 16'

### Chemische Analyse (Gewichtsanteil trockene Basis)

| | |
|---|---|
| C | 87,4 % |
| H | 0,1 % |
| N | 0,1 % |
| O | 0,4 % |
| S | 0,6 % |
| Asche | 11,4 % |
| C-fix | 0,9 % |

### Korngrößenverteilung des Koksstaubes 16'

- 500 µm 100 %
- 250 µm 85 %
- 100 µm 51 %
- 63 µm 66%
- 25 µm 21 %

### • feinteilchenförmiges eisenhältiges Material 15:

### Chemische Analyse (Gewichtsanteile):

| | |
|---|---|
| Fe_{ges} | 66,3 % |
| Fe₀ | 0,4 % |
| Fe₂O₃ | 94,5 % |
| Glühverluste | 1,0 % |
| Feuchte | 1,0 % |

### Korngrößenverteilung

- 4000 µm 100 %
- 1000 µm 97 %
- 500 µm 89 %
- 250 µm 66 %
- 125 µm 25 %

### • Zuschläge:

### Chemische Analyse (Gewichtsanteile):

| | |
|---|---|
| CaO | 34,2 % |
| MgO | 9,9 % |
| SiO₂ | 14,1 % |
| Al₂O₃ | 0,3% |
| Fe₂O₃ | 1,1 % |
| MnO | 0,5% |
| Glühverluste | 39,1 % |

Es werden über die als Blasformen ausgebildeten Zuführungen 22 416 Nm³ O₂/t RE zum Vergasen der Kohle ins Bett 26 eingebracht, der Verbrauch des Brenners 14 beträgt 236 Nm³ O₂/t RE.

### • Roheisen 23:

### Chemische Analyse (Gewichtsanteile):

| | |
|---|---|
| C | 4,3 % |
| Si | 0,4 % |
| Mn | 0,1 % |
| P | 0,12 % |
| S | 0,05 % |
| Fe | 95,0 % |

### • Exportgas:

| | |
|---|---|
| Menge | 1.690 Nm³/t RE |

### Analyse (Volumenanteile):

| | |
|---|---|
| CO | 44,8 % |
| CO₂ | 36,2 % |
| H₂ | 12,8 % |
| H₂O | 2 % |
| N₂ + Ar | 3,0 % |
| CH₄ | 1,0 % |
| | |
| Heizwert: | 7.425 kJ/Nm³ |

### Beispiel III:

Für die Erzeugung von 40 t Roheisen/h mit einer Anlage gemäß Fig. 4 werden 1.020 kg Kohle/t RE, davon 340 kg Feinkohle/t RE 16" und der Rest als stückige Kohle (bei 21) sowie 1.460 kg feinteilchenförmiges eisenhältiges Material/t RE eingesetzt.

### • Kohle:

### Chemische Analyse der Kohle (Feinkohle 16" und stückige Kohle, Gewichtsanteile, trockene Basis)

| | | | |
|---|---|---|---|
| C | 77,2 % | | |
| H | 4,6 % | | |
| N | 1,8 % | | |
| O | 6,8 % | | |
| S | 0,5 % | | |
| Asche | 9,0 % | C-fix | 63,0 % |

### Korngrößenverteilung der Feinkohle 16"

- 500 µm 100 %
- 250 µm 85 %
- 100 µm 51 %
- 63 µm 66 %
- 25 µm 21 %

### • feinteilchenförmiges eisenhältiges Material 15:

### Chemische Analyse (Gewichtsanteile):

| | |
|---|---|
| Fe_{ges} | 66,3 % |
| Fe₀ | 0,4 % |
| Fe₂O₃ | 94,5 % |
| Glühverluste | 1,0 % |
| Feuchte | 1,0 % |

### Korngrößenverteilung

- 4000 µm 1 00 %
- 1000 µm 97 %
- 500 µm 89 %
- 250 µm 66 %
- 125 µm 25 %

### • Zuschläge:

### Chemische Analyse (Gewichtsanteile):

| | |
|---|---|
| CaO | 34.2 % |
| MgO | 9,9 % |
| SiO₂ | 14,1 % |
| Al₂O₃ | 0,3 % |
| Fe₂O₃ | 1,1 % |
| MnO | 0,5 % |
| Glühverluste | 39,1 % |

Es werden über die als Blasformen ausgebildeten Zuführungen 22 321 Nm³ O₂/t RE zum Vergasen der Kohle ins Bett 26 eingebracht, der Verbrauch des Brenners 14 beträgt 255 Nm³ O₂/t RE und des Brenners 34 75 Nm³ O₂/t RE .

### • Roheisen 23:

### Chemische Analyse (Gewichtsanteile):

| | |
|---|---|
| C | 4,3 % |
| Si | 0,4 % |
| Mn | 0,09 % |
| P | 0,1 % |
| S | 0,05 % |
| Fe | 95,0 % |

### • Exportgas:

| | |
|---|---|
| Menge: | 1.720 Nm³/t RE |

### Analyse (Volumenanteile):

| | |
|---|---|
| CO | 38,7 % |
| CO₂ | 37,2 % |
| H₂ | 16,4 % |
| H₂O | 2 % |
| N₂ + Ar | 4,6 % |
| CH₄ | 1,1 % |
| Heizwert: | 7.060 kJ/Nm³ |

## Patentansprüche

1. Verfahren zur Herstellung von flüssigem Roheisen (23) oder Stahlvorprodukten aus feinteilchenförmigem eisenhältigem Material (15), insbesondere reduziertem Eisenschwamm, in einer Einschmelzvergasungszone eines Einschmelzvergasers (1) mit einem unteren Abschnitt (I) für die Aufnahme schmelzflüssigen Materials, einem darüber liegenden Abschnitt (II) mit einem Festbett (26) aus festen stückigen Kohlenstoffträgern sowie einem darüber liegenden Abschnitt (III), der als Beruhigungsraum für sich bildendes Gas fungiert und mit einem haubenförmigen Kopf (13) abgeschlossen ist, wobei unter Zuführung von kohlenstoffhältigem Material und sauerstoffhältigem Gas in die Einschmelzvergasungszone bei gleichzeitiger Bildung eines Export-Reduktionsgases in dem aus festen stückigen Kohlenstoffträgern gebildeten Festbett (26) das eisenhältige Material (15) bei Durchtritt durch das Festbett (26) eingeschmolzen wird, gegebenenfalls nach vorheriger Fertigreduktion, **dadurch gekennzeichnet, daß** zentral am haubenförmigen Kopf (13) und am oberen Ende des Beruhigungsraumes (III) eine Hochtemperatur-Brenn und/oder Vergasungszone (27) durch Verbrennung und/oder Vergasung von kohlenstoffhältigem Material (16', 16") unter direkter Sauerstoffzufuhr gebildet wird, in die das feinteilchenförmige eisenhältige Material (15) direkt nach unten gerichtet eingeleitet wird, wobei durch die bei der Umsetzung des kohlenstoffhältigen Materials (16', 16") freiwerdende Wärme zumindest ein Oberflächen-Anschmelzen des eisenhaltigen Materials (15) und ein Agglomerieren desselben durchgeführt wird.

2. Verfahren nach Anspruch 1, **dadurch gekennzeichnet, daß** das Agglomerieren unter Verwirbeln des eisenhältigen Materials (15) in der Hochtemperatur-Brenn- und/oder Vergasungszone (27) beschleunigt und intensiviert wird.

3. Verfahren nach Anspruch 2, **dadurch gekennzeichnet, daß** die Zufuhr des Sauerstoffs in die Hochtemperatur-Brenn- und/oder Vergasungszone (27) ebenfalls unter Verwirbelung erfolgt.

4. Verfahren nach einem oder mehreren der Ansprüche 1 bis 3, **dadurch gekennzeichnet, daß** das eisenhältige Material (15) vermischt mit festem, feinteiligem, kohlenstoffhältigem Material (16', 16") in die Hochtemperatur-Brenn- und/oder Vergasungszone (27) eingeleitet wird.

5. Verfahren nach einem oder mehreren der Ansprüche 1 bis 4, **dadurch gekennzeichnet, daß** die Eintrittsgeschwindigkeit des eisenhältigen Materials (15) in die Hochtemperatur-Brenn- und/oder Vergasungszone (27) mittels eines Treibgases, wie Stickstoff oder prozeßeigenes Gas, erhöht wird.

6. Verfahren nach einem oder mehreren der Ansprüche 1 bis 5, **dadurch gekennzeichnet, daß** in der Einschmelzvergasungszone gebildetes Reduktionsgas einer Vorwärmzone und/oder einer Direktreduktionszone zur Vorbehandlung des eisenhältigen Materials zugeführt wird, wobei das vorgewärmte und/oder vorreduzierte eisenhältige Material (15) im heißen Zustand der Hochtemperatur-Brenn- und/oder Vergasungszone (27) zugeführt wird (Fig. 2, 3, 4).

7. Verfahren nach Anspruch 6, **dadurch gekennzeichnet, daß** der Vorwärm- bzw. Direktreduktionszone zusätzlich Koksstaub (16') zugeführt wird (Fig. 2).

8. Verfahren nach Anspruch 7, **dadurch gekennzeichnet, daß** in den Einschmelzvergaser (1) im Nahbereich der Reduktionsgas-Ableitung (2) Feinkohle (16") und/oder andere kohlenstoffhältige Materialien mit Flüchtigenanteil zusammen mit sauerstoffhältigem Gas eingeleitet wird, die Feinkohle (16") und/oder andere kohlenstoffhältige Materialien mit Flüchtigenanteil zu Feinkoks (16') umgesetzt wird und der Feinkoks (16') zusammen mit dem Reduktionsgas aus dem Einschmelzvergaser (1) ausgetragen wird, abgeschieden wird und der Hochtemperatur-Brenn- und/oder Vergasungszone (27) zugeführt wird (Fig. 4).

9. Verfahren nach einem oder mehreren der Ansprüche 1 bis 8, **dadurch gekennzeichnet, daß** heißer Feinkoks (16') gemischt mit heißem eisenhältigen Material (15) der Hochtemperatur-Brenn und/oder Vergasungszone zugeführt wird (Fig. 2, 4).

10. Verfahren nach einem oder mehreren der Ansprüche 1 bis 3, 5 und 6, **dadurch gekennzeichnet, daß** der Hochtemperatur-Brenn- und/oder Vergasungszone (27) Feinkohle (16") und/oder andere kohlenstoffhältige Materialien mit Flüchtigenanteil separiert vom eisenhaltigen Material (15) zugeführt wird (Fig. 3).

11. Verfahren nach einem oder mehreren der Ansprüche 1 bis 10, **dadurch gekennzeichnet, daß** zusätzlich stückige Kohle in die Einschmelzvergasungszone eingebracht wird.

12. Verfahren nach einem oder mehreren der Ansprüche 6 bis 11, **dadurch gekennzeichnet, daß** in der Vorwärm- und/oder Direktreduktionszone eine Trennung des eisenhältigen Materials in eine Feinkornfraktion und eine Grobkornfraktion, letztere vorzugsweise mit Teilchen zwischen 0,5 und 8 mm, durchgeführt wird und nur die Feinkornfraktion der Hochtemperatur-Brenn- und/oder Vergasungszone (27) und die Grobkornfraktion direkt in den Einschmelzvergaser (1), vorzugsweise dessen Beruhigungszone (III), eingebracht werden.

13. Verfahren nach einem oder mehreren der Ansprüche 6 bis 12, **dadurch gekennzeichnet, daß** das Reduktionsgas der Vorwärmzone und/oder Direktreduktionszone ungereinigt zugeführt wird.

14. Anlage zur Durchführung des Verfahrens nach einem oder mehreren der Ansprüche 1 bis 13, mit einem Einschmelzvergaser (1) mit Zu- und Ableitungen (2, 12, 20, 17, 30, 31) für die Zugabe von kohlenstoffhältigem Material (16', 16"), eisenhältigem Material (15), für den Abzug des erzeugten Export-Reduktionsgases und für die Zuführung von sauerstoffhältigem Gas in die Einschmelzvergasungszone, sowie weiters mit einem Schlacken- und Eisen-Schmelzenabstich (25), wobei ein unterer Abschnitt (I) des Einschmelzvergasers (1) zum Auffangen des geschmolzenen Roheisens (23) bzw. Stahlvormaterials und der flüssigen Schlacke (24), ein darüber liegender mittlerer Abschnitt (II) zur Aufnahme eines Bettes (26) aus festen stückigen Kohlenstoffträgern und anschließend ein oberer Abschnitt (III) als Beruhigungsraum für in der Einschmelzvergasungszone gebildetes Reduktionsgas, der mit einem haubenförmigen Kopf (13) abgeschlossen ist, vorgesehen sind, **dadurch gekennzeichnet, daß** zentral am haubenförmigen Kopf (13) und am oberen Ende des Beruhigungsraumes (III) mindestens ein ein sauerstoffhältiges Gas und feinteilchenförmiges eisenhältiges Material (15) nach unten zuführender Brenner (14) und eine Zuführeinrichtung (17) zur Zufuhr von festen feinteilchenförmigen Kohlenstoffträgem (16', 16") vorgesehen sind.

15. Anlage nach Anspruch 14, **dadurch gekennzeichnet, daß** ein einziger zentral, d.h. an der vertikalen Längsmittelachse des Einschmelzvergasers ( 1 ) angeordneter Brenner (14) vorgesehen ist, dessen Brennermund (14') gegen die Oberfläche des Bettes (26) gerichtet ist.

16. Anlage nach Anspruch 14 oder 15, **dadurch gekennzeichnet, daß** der Brenner (14) als Sauerstoff-Kohlenstoff-Brenner, d.h. auch zur Zufuhr der festen feinteilchenförmigen Kohlenstoffträger (16', 16") dienend, ausgebildet ist.

17. Anlage nach einem oder mehreren der Ansprüche 14 bis 16, **dadurch gekennzeichnet, daß** der Brenner (14) mit einer Verwirbelungseinrichtung für die über den Brenner (14) zugeführten Feststoffe versehen ist.

18. Anlage nach einem oder mehreren der Ansprüche 14 bis 17, **dadurch gekennzeichnet, daß** der Brenner (14) mit einer Verwirbelungseinrichtung für das über den Brenner (14) zugeführte sauerstoffhältige Gas versehen ist.

19. Anlage nach einem oder mehreren der Ansprüche 14 bis 18, **dadurch gekennzeichnet, daß** in den Brenner eine Mischgut-Leitung (17) zur Zuführung des feinteilchenförmigen eisenhältigen Materials (15) und der festen feinteilchenförmigen Kohlenstoffträger (16', 16") mündet (Fig. 1, 2, 4).

20. Anlage nach einem oder mehreren der Ansprüche 14 bis 18, **dadurch gekennzeichnet, daß** in den Brenner (14) eine heißes feinteilchenförmiges eisenhältiges Material (15) zuführende Leitung (17') mündet und dieses Material über eine eigene Leitung (31) bis zum Brennermund (14') geführt ist, und daß weiters eine eigene bis zum Brennermund (14') geführte Leitung (30) im Brenner (14) vorgesehen ist, in die eine feste feinteilchenförmige Kohlenstoffträger, wie Kohle (16"), zuführende Leitung mündet (Fig. 3, 5).

21. Anlage nach einem oder mehreren der Ansprüche 14 bis 20, **dadurch gekennzeichnet, daß** eine Reduktionsgas-Ableitung (2), vom Beruhigungsraum (III) des Einschmelzvergasers (1) ausgehend, in eine Einrichtung (28) zum Vorwärmen und/oder Direktreduzieren des feinteilchenförmigen eisenhältigen Materials (15) mündet (Fig. 2, 3, 4).

22. Anlage nach Anspruch 21, **dadurch gekennzeichnet, daß** in der Reduktionsgas-Ableitung (2) ein Staubabscheider (3) zwischengeschaltet ist, von dem eine Staubrückführleitung (11) einem in Höhe des Beruhigungsraumes (III) angeordneten Staubbrenner (9) zugeführt ist.

23. Anlage nach Anspruch 21 oder 22, **dadurch gekennzeichnet, daß** die Einrichtung (28) zum Vorwärmen und/oder zur Direktreduktion zusätzlich zum Vorwärmen von Koksstaub (16') gemischt mit feinteilchenförmigem eisenhaltigem Material (15) dient und eine von der Vorwärm- und/oder Vorreduktionseinrichtung (28) ausgehende Mischgut-Leitung (17) in den Brenner mündet (Fig. 2).

24. Anlage nach einem oder mehreren der Ansprüche 14 bis 22, **dadurch gekennzeichnet, daß** der Einschmelzvergaser (1) im Nahbereich der Öffnung (33) der Reduktionsgas-Ableitung (2) einen Brenner (34) zur Zufuhr von feinteilchenförmiger Kohle (16") und/oder anderen kohlenstoffhältigen Materialien mit Flüchtigenanteil aufweist, und daß in der Reduktionsgas-Ableitung (2) ein Staubabscheider (3) zur Abscheidung von mit dem Reduktionsgas ausgetragenem feinteilchenförmigem Koks (16') vorgesehen ist, wobei von dem Staubabscheider (3) eine Staubrückführleitung (11) in eine feinteilchenförmiges eisenhältiges Material dem Brenner zuführende Leitung mündet (Fig. 4).

25. Anlage nach einem oder mehreren der Ansprüche 21 bis 24, **dadurch gekennzeichnet, daß** die Einrichtung (28) zum Vorwärmen und/oder Direktreduzieren eine Fraktioniereinrichtung zur Trennung des eisenhältigen Materials in eine Grob- und eine Feinkornfraktion aufweist und die Feinkornfraktion über die Mischgutleitung (17) bzw. Leitung (17') zum Brenner (14) geführt ist, wogegen die Grobkornfraktion über eine Leitung (17") zum Einschmelzvergaser (1) direkt zugeführt wird.

26. Anlage nach einem oder mehreren der Ansprüche 21 bis 25, **dadurch gekennzeichnet, daß** die Reduktionsgasableitung (2) in die Einrichtung (28) zum Vorwärmen und/oder Direktreduzieren direkt, d.h. ohne Zwischenschaltung eines Staubabscheiders (3), mündet.

## Claims

1. A process for the production of liquid pig iron (23) or steel pre-products from fine-particulate iron-containing material (15), in particular reduced sponge iron, in a meltdown gasifying zone of a melter gasifier (1) comprising a lower section (I) for receiving molten material, a superimposed section (II) with a fixed bed (26) of solid lumpy carbon carriers as well as a superimposed section (III) functioning as a killing space for gas that is forming and closed by a cap-shaped head (13), wherein, under the supply of carbon-containing material and oxygen-containing gas into the meltdown gasifying zone and at the simultaneous formation of an export reducing gas, in the fixed bed (26) formed from solid lumpy carbon carriers, the iron-containing material (15) is melted when passing the fixed bed (26), optionally upon previous complete reduction, **characterized in that**, centrally on the cap-shaped head (13) and at the upper end of the killing space (III), a high-temperature combustion and/or gasification zone (27) is formed by combusting and/or gasifying carbon-containing material (16', 16") under direct supply of oxygen, into which high-temperature combustion and/or gasification zone the fine-particulate iron-containing material (15) is directly introduced in a downward manner, wherein at least incipient surface melting of the iron-containing material (15) and agglomeration of the same are carried out by means of the heat released during the reaction of the carbon-containing material (16', 16").

2. A process according to claim 1, **characterized in that** agglomeration is accelerated and intensified under swirling of the iron-containing material (15) in the high-temperature combustion and/or gasification zone (27).

3. A process according to claim 2, **characterized in that** the supply of oxygen into the high-temperature combustion and/or gasification zone (27) likewise is effected under swirling.

4. A process according to one or several of claims 1 to 3, **characterized in that** the iron-containing material (15) is introduced into the high-temperature combustion and/or gasification zone (27) after having been mixed with solid fine-particle carbon-containing material (16', 16").

5. A process according to one or several of claims 1 to 4, **characterized in that** the speed of entry of the iron-containing material (15) into the high-temperature combustion and/or gasification zone (27) is increased by means of a propellant, such as nitrogen or in-process gas.

6. A process according to one or several of claims 1 to 5, **characterized in that** reducing gas formed in the meltdown gasifying zone is supplied to a preheating zone and/or a direct reduction zone for pretreating the iron-containing material, wherein the preheated and/or prereduced iron-containing material (15) is supplied to the high-temperature combustion and/or gasification zone (27) in the hot state (Figs. 2, 3, 4).

7. A process according to claim 6, **characterized in that** coke dust (16') is additionally supplied to the preheating zone and/or direct reduction zone (Fig. 2).

8. A process according to claim 7, **characterized in that** fine coal (16") and/or other carbon-containing materials having a volatile content along with oxygen-containing gas is (are) introduced into the melter gasifier (1) in the vicinity of the reducing-gas discharge duct (2), the fine coal (16") and/or other carbon-containing materials having a volatile content is (are) reacted to fine coke (16') and the fine coke (16') is discharged from the melter gasifier (1) along with the reducing gas, is separated and is supplied to the high-temperature combustion and/or gasification zone (27) (Fig. 4).

9. A process according to one or several of claims 1 to 8, **characterized in that** hot fine coke (16') is supplied to the high-temperature combustion and/or gasification zone after having been mixed with hot iron-containing material (15) (Figs. 2, 4).

10. A process according to one or several of claims 1 to 3, 5 and 6, **characterized in that** fine coal (16") and/or other carbon-containing materials having a volatile content is (are) supplied to the high-temperature combustion and/or gasification zone (27) separately from the iron-containing material (15) (Fig. 3).

11. A process according to one or several of claims 1 to 10, **characterized in that** lumpy coal is additionally introduced into the meltdown gasifying zone.

12. A process according to one or several of claims 6 to 11, **characterized in that** in the preheating zone and/or direct reduction zone separation of the iron-containing material into a fine-grain fraction and a coarse-grain fraction is carried out, the latter preferably having particles of between 0.5 and 8 mm, and only the fine-grain fraction is introduced into the high-temperature combustion and/or gasification zone (27) and the coarse-grain fraction is directly introduced into the melter gasifier (1), preferably the killing space (III) of the same.

13. A process according to one or several of claims 6 to 12, **characterized in that** the reducing gas is fed to the preheating zone and/or direct reduction zone unpurified.

14. A plant for carrying out the process according to one or several of claims 1 to 13, comprising a melter gasifier (1) including supply and discharge ducts (2, 12, 20, 17, 30, 31) for adding carbon-containing material (16', 16"), iron-containing material (15), for discharging the export reducing gas produced and for feeding oxygen-containing gas into the meltdown gasifying zone, as well as furthermore a slag and iron-melt tap (25), wherein a lower section (I) of the melter gasifier (1) is provided for collecting the molten pig iron (23) or steel pre-material and the liquid slag (24), a superimposed central section (II) is provided for accommodating a bed (26) of solid lumpy carbon carriers and subsequently an upper section (III) is provided as a killing space for reducing gas formed in the meltdown gasifying zone, which section is closed by a cap-shaped head (13), **characterized in that** at least one burner (14) supplying an oxygen-containing gas and fine-particulate iron-containing material (15) in a downward direction and a supply means (17) for supplying solid fine-particulate carbon carriers (16', 16") are provided centrally on the cap-shaped head (13) and at the upper end of the killing space (III).

15. A plant according to claim 14, **characterized in that** a single burner (14) arranged centrally, i.e., on the vertical longitudinal central axis of the melter gasifier (1), is provided, whose burner mouth (14') is directed towards the surface of the bed (26).

16. A plant according to claim 14 or 15, **characterized in that** the burner (14) is designed as an oxygen-carbon-burner, i.e., so as to serve also the supply of the solid fine-particulate carbon carriers (16', 16").

17. A plant according to one or several of claims 14 to 16, **characterized in that** the burner (14) is provided with a swirling means for the solids supplied via the burner (14).

18. A plant according to one or several of claims 14 to 17, **characterized in that** the burner (14) is provided with a swirling means for the oxygen-containing gas fed via the burner (14).

19. A plant according to one or several of claims 14 to 18, **characterized in that** a mixed-stock duct (17) for supplying the fine-particulate iron-containing material (15) and the solid fine-particulate carbon carriers (16', 16") runs into the burner (Figs. 1, 2, 4).

20. A plant according to one or several of claims 14 to 18, **characterized in that** a duct (17') supplying hot fine-particulate iron-containing material (15) runs into the burner (14) and said material is conducted as far as the burner mouth (14') through a separate duct (31) and that, furthermore, a separate duct (30) conducted as far as the burner mouth (14') is provided within the burner (14), into which a duct supplying solid fine-particulate carbon carriers, such as coal (16"), runs (Figs. 3, 5).

21. A plant according to one or several of claims 14 to 20, **characterized in that** a reducing-gas discharge duct (2) runs into a means (28) for preheating and/or directly reducing the fine-particulate iron-containing material (15), departing from the killing space (III) of the melter gasifier (1) (Figs. 2, 3, 4).

22. A plant according to claim 21, **characterized in that** a dust separator (3) is arranged intermediately in the reducing-gas discharge duct (2), from which a dust recycling duct (11) is led to a dust burner (9) arranged on the level of the killing space (III).

23. A plant according to claim 21 or 22, **characterized in that** the means (28) for preheating and/or direct reduction additionally serves to preheat coke dust (16') mixed with fine-particulate iron-containing material (15) and a mixed-stock duct (17) departing from the preheating and/or prereduction means (28) runs into the burner (Fig. 2).

24. A plant according to one or several of claims 14 to 22, **characterized in that** the melter gasifier (1) comprises a burner (34) in the vicinity of the opening (33) of the reducing-gas discharge duct (2), for supplying fine-particulate coal (16") and/or other carbon-containing materials having a volatile content and that a dust separator (3) is provided in the reducing-gas discharge duct (2) for separating fine-particulate coke (16') discharged along with the reducing gas, a dust recycling duct (11) departing from the dust separator (3) running into a duct supplying fine-particulate iron-containing material to the burner (Fig. 4).

25. A plant according to one or several of claims 21 to 24, **characterized in that** the means (28) for preheating and/or direct reduction is provided with a fractionating means for separating the iron-containing material into a coarse- and a fine-grain fraction and the fine-grain fraction is conducted to the burner (14) through the mixed-stock duct (17) or the duct (17') respectively, whereas the coarse-grain fraction is supplied to the melter gasifier (1) directly, via a duct (17").

26. A plant according to one or several of claims 21 to 25, **characterized in that** the reducing-gas discharge duct (2) runs into the preheating and/or direct-reduction means (28) directly, i.e. with no dust separator (3) arranged intermediately.

## Revendications

1. Procédé de fabrication de fer brut (23) liquide, ou bien de pré-produit en acier, à partir d'un matériau (15) contenant du fer, se présentant sous la forme de fines particules, en particulier d'éponge de fer réduite, dans une zone de gazéification avec mise en fusion d'un gazéificateur de mise en fusion (1), avec un tronçon inférieur (I) pour recevoir du matériau liquide par mise à fusion, un tronçon (II) placé au-dessus, avec un lit fixe (26) réalisé à partir de supports de carbone en morceaux, ainsi qu'un tronçon (III) placé par-dessus, servant d'espace de tranquillisation pour du gaz en formation et fermé par une tête (13) en forme de hotte, sachant qu'en amenant du matériau contenant du carbone et un gaz contenant de l'oxygène dans la zone de gazéification avec mise en fusion, en formant simultanément un gaz de réduction par export dans le lit fixe (26) formé de supports en carbone en morceaux solides, le matériau (15) contenant du fer est mis en fusion lors du passage à travers le lit fixe (26), le cas échéant après avoir subi une réduction totale, **caractérisé en ce que** centralement est formée, sur la tête (13) en forme de hotte et sur l'extrémité supérieure de l'espace de tranquillisation (III), une zone de combustion à haute température et/ou de gazéification (27), par combustion et/ou gazéification d'un matériau (16', 16") contenant du carbone, avec apport direct d'oxygène, zone dans laquelle le matériau (15) contenant du fer, se présentant sous forme de fines particules, est directement introduit en étant orientée vers le bas, sachant que, du fait de la chaleur dégagée lors de la conversion du matériau (16', 16") contenant du carbone, au moins une mise en fusion de surface du matériau contenant du fer (15) et une agglomération de celui-ci sont effectuées.

2. Procédé selon la revendication 1, **caractérisé en ce que** l'agglomération est accélérée et intensifiée, avec une mise en tourbillonnement du matériau (15) contenant du fer, dans la zone de combustion à haute température et/ou de gazéification (27).

3. Procédé selon la revendication 2, **caractérisé en ce que** l'apport de l'oxygène dans la zone de combustion à haute température et/ou de gazéification (27) se fait également avec mise en tourbillonnement.

4. Procédé selon l'une ou plusieurs des revendications 1 à 3, **caractérisé en ce que** le matériau (15) contenant du fer est introduit dans la zone de combustion à haute température et/ou de gazéification (27), en étant mélangé à du matériau (16', 16") solide, finement divisé, contenant du carbone.

5. Procédé selon l'une ou plusieurs des revendications 1 à 4, **caractérisé en ce que** la vitesse d'entrée du matériau (15) contenant du fer dans la zone de combustion à haute température et/ou de gazéification (27) est augmentée en utilisant un gaz propulseur, tel que de l'azote ou un gaz propre au processus.

6. Procédé selon l'une ou plusieurs des revendications 1 à 5, **caractérisé en ce que** le gaz de réduction formé dans la zone de gazéification avec mise en fusion est amené à une zone de préchauffage et/ou à une zone de réduction directe dans le but d'un pré-traitement du matériau contenant du fer, sachant que le matériau (15) contenant du fer ayant été préchauffé et/ou pré-réduit est amené à l'état chaud à la zone de combustion à haute température et/ou de gazéification (27) (Fig. 2, 3, 4).

7. Procédé selon la revendication 6, **caractérisé en ce qu'**à la zone de préchauffage et/ou de réduction directe est amenée en plus de la poussière de coke (16') (Fig. 2).

8. Procédé selon la revendication 7, **caractérisé en ce que** dans le gazéificateur avec mise en fusion (1), dans la zone de proximité de la dérivation de gaz de réduction (2), sont introduits des fines de charbon (16") et/ou d'autres matériaux contenant du carbone, ayant une teneur en matière volatile conjointement avec du gaz contenant de l'oxygène, les fines de charbon (16") et/ou d'autres matériaux contenant du carbone, ayant une proportion de matière volatile, étant convertis en coke fin (16'), et le coke fin (16'), conjointement avec le gaz de réduction, étant expulsé du gazéificateur avec mise en fusion (1), séparé et amené à la zone dé combustion à haute température et/ou de gazéification (27) (Fig. 4).

9. Procédé selon l'une ou plusieurs des revendications 1 à 8, **caractérisé en ce que** du coke fin (16') chaud, mélangé à du matériau (15) contenant du fer, chaud, est amené à la zone de combustion à haute température et/ou de gazéification (Fig. 2, 4).

10. Procédé selon l'une ou plusieurs des revendications 1 à 3, et 5 et 6, **caractérisé en ce qu'**à la zone de combustion à haute température et/ou de gazéification (27) sont amenées des fines de charbon (16") et/ou d'autres matériaux contenant du carbone, avec une proportion de matière volatile, ceci séparément du matériau (15) contenant du fer. (Fig. 3).

11. Procédé selon l'une ou plusieurs des revendications 1 à 10, **caractérisé en ce que** du charbon en morceaux est introduit à titre supplémentaire dans la zone de gazéification avec mise en fusion.

12. Procédé selon l'une ou plusieurs des revendications 6 à 11, **caractérisé en ce que**, dans la zone de préchauffage et/ou de réduction directe, est effectuée une séparation contenant du fer, en une fraction à grains fins et une fraction à grains grossiers, cette dernière de préférence avec des particules comprises entre 0,5 et 8 mm, et seule la fraction à grains fins est introduite dans la zone de combustion à haute température et/ou de gazéification (27), et la fraction à grains grossiers est introduite directement dans le gazéificateur avec mise en fusion (1) de préférence sa zone de tranquillisation (III).

13. Procédé selon l'une ou plusieurs des revendications 6 à 12, **caractérisé en ce que** le gaz de réduction est amené à la zone de préchauffage et/ou à la zone de réduction directe, à l'état non épuré.

14. Installation de mise en oeuvre du procédé selon l'une ou plusieurs des revendications 1 à 13, avec un gazéificateur avec mise en fusion (1), équipé de conduites d'amenée et d'évacuation (2, 12, 20, 17, 30, 31) pour l'addition d'un matériau (16', 16") contenant du carbone, d'un matériau (15) contenant du fer, pour l'extraction du gaz de réduction d'export produit et pour l'amenée de gaz contenant de l'oxygène dans la zone de gazéification avec mise en fusion, ainsi qu'en outre avec un piquage de scories et de fer fondu (25), sachant qu'un tronçon inférieur (I) du gazéificateur avec mise en fusion (1) est prévu pour le piégeage du fer brut (23) fondu, respectivement du matériau préliminaire à base d'acier et des scories (24) liquides, un tronçon (II) central situé au-dessus pour recevoir un lit (26) formé de supports en carbone fixes monoblocs, et ensuite un tronçon (III) à titre d'espace de tranquillisation pour le gaz de réduction formé dans la zone de gazéification avec mise en fusion, qui est fermé par une tête (13) en forme de hotte, **caractérisée en ce que**, centralement sur la tête (13) en forme de hotte et à l'extrémité supérieure de l'espace de tranquillisation (III) sont prévus au moins un brûleur (14) amenant vers le bas un gaz contenant de l'oxygène et du matériau (15) contenant du fer se présentant sous forme de particules finement divisées, et un dispositif d'amenée (17) pour l'amenée de supports de carbone (16', 16") solides se présentant sous la forme de particules fines.

15. Installation selon la revendication 14, **caractérisée en ce qu'**un brûleur (14) central unique, c'est-à-dire disposé sur l'axe médian, longitudinal, vertical, du gazéificateur avec mise en fusion (1), est prévu dans l'embouchure de brûleur (14') et dirigé vers la surface du lit (26).

16. Installation selon la revendication 14 ou 15, **caractérisée en ce que** le brûleur (14) est réalisé sous la forme de brûleur oxygène-carbone, c'est-à-dire également servant à l'amenée des supports de carbone (16', 16") solides, se présentant sous la forme de fines particules.

17. Installation selon l'une ou plusieurs des revendications 14 à 16, **caractérisée en ce que** le brûleur (14) est muni d'un dispositif de mise en tourbillonnement ou fluidisation pour les solides amenés par le brûleur (14).

18. Installation selon l'une ou plusieurs des revendications 14 à 17, **caractérisée en ce que** le brûleur (14) est muni d'un dispositif de mise en tourbillonnement pour le gaz contenant de l'oxygène, ayant été amené par le brûleur (14).

19. Installation selon l'une ou plusieurs des revendications 14 à 18, **caractérisée en ce que**, dans les brûleurs, débouche une conduite de produit mélangé (17) pour l'amenée du matériau (15) contenant du fer, se présentant sous forme de fines particules, et des supports de carbone (16', 16") solides, se présentant sous forme de fines particules (Figs. 1, 2, 4).

20. Installation selon une ou plusieurs des revendications 14 à 18, **caractérisée en ce que** dans le brûleur (14), débouche une conduite (17') amenant à un matériau (15) contenant du fer, chaud, en forme de fines particules, et ce matériau étant guidé par une conduite (31) propre jusqu'à l'embouchure de brûleur (14') et **en ce qu'**en outre, est prévue dans le brûleur (14) une conduite (30) propre, guidée jusqu'à l'embouchure de brûleur (14'), conduite (30) dans laquelle débouche une conduite amenant un support de carbone solide, se présentant sous forme de fines particules, tel que du charbon (16") (Figs. 3, 5).

21. Installation selon une ou plusieurs des revendications 14 à 20, **caractérisée en ce qu'**une conduite de dérivation de gaz de réduction (2), partant de la chambre de tranquillisation (III) du gazéificateur avec mise en fusion (1), débouche dans un dispositif (28) pour assurer le préchauffage et/ou la réduction directe du matériau (15) contenant du fer, se présentant sous forme de fines particules (Figs. 2, 3, 4).

22. Installation selon la revendication 21, **caractérisée en ce que**, dans la conduite de dérivation de gaz de réduction (2), est intercalé un séparateur à poussière (3), dont une conduite de retour de poussière (11) est amenée à un brûleur à poussière (9) disposé à hauteur de la chambre de tranquillisation (III).

23. Installation selon la revendication 21 ou 22, **caractérisée en ce que** le dispositif (28), servant au préchauffage et/ou à la réduction directe, sert en plus au préchauffage de poussière de coke (16'), mélangé à du matériau (15) contenant du fer, en forme de fines particules, et une conduite de produit mélangé (17), sortant du dispositif de préchauffage et/ou de pré-réduction (28), débouche dans le brûleur (Fig. 2).

24. Installation selon l'une ou plusieurs des revendications 14 à 22, **caractérisée en ce que** le gazéificateur avec mise en fusion (1) présente, dans la zone proche de l'ouverture (33) de la conduite de dérivation de gaz de réduction (2), un brûleur (34) pour l'amenée de charbon (16"), se présentant en forme de fines particules et/ou d'autres matériaux contenant du carbone, avec une proportion en matière volatile, et **en ce que**, dans la conduite de dérivation de gaz de réduction (2), est prévu un séparateur à poussière (3) pour la séparation de coke (16') en forme de fines particules, expulsé avec le gaz de réduction, sachant qu'une conduite de retour de poussière (11'), partant du séparateur à poussière (3), débouche dans une conduite amenant au brûleur un matériau contenant du fer, se présentant sous la forme de fines particules (Fig. 4).

25. Installation selon l'une ou plusieurs des revendications 21 à 24, **caractérisée en ce que** le dispositif (28) servant au préchauffage et/ou à la réduction directe présente un dispositif de fractionnement pour la séparation du matériau contenant du fer, pour donner une fraction à grains grossiers, une fraction à grains fins, et la fraction à grains fins étant amenée, en passant par la conduite de produit mélangé (17) ou la conduite (17') au brûleur (14), alors que par contre, la fraction à grains grossiers étant amenée directement au gazéificateur avec mise en fusion (1), en passant par une conduite (17").

26. Installation selon l'une ou plusieurs des revendications 21 à 25, **caractérisée en ce que** la conduite de dérivation de gaz de réduction (2) débouche dans le dispositif (28) servant au préchauffage et/ou à la réduction directe, ceci se faisant directement, c'est-à-dire sans interposition d'un séparateur à poussière (3).
